(19) Europäisches Patentamt / European Patent Office / Office européen des brevets

(11) **EP 4 301 589 B1**

(12) **EUROPEAN PATENT SPECIFICATION**

(45) Date of publication and mention
of the grant of the patent:
**12.02.2025 Bulletin 2025/07**

(21) Application number: **22711344.6**

(22) Date of filing: **02.03.2022**

(51) International Patent Classification (IPC):
*B29C 73/16* (2006.01)     *C09J 153/02* (2006.01)
*B60C 19/12* (2006.01)     *B29D 30/06* (2006.01)
*B29C 73/22* (2006.01)     *B29L 30/00* (2006.01)

(52) Cooperative Patent Classification (CPC):
(C-Sets available)
**B29C 73/163; B29D 30/0685; B60C 19/122;
C09J 153/02;** B29C 73/22; B29L 2030/00;
B60C 19/002     (Cont.)

(86) International application number:
**PCT/IT2022/050041**

(87) International publication number:
**WO 2022/185354 (09.09.2022 Gazette 2022/36)**

(54) **ADHESIVE SEALANT FORMULATION FOR TIRES**

KLEBDICHTSTOFFFORMULIERUNG FÜR REIFEN

FORMULATION D'AGENT D'ÉTANCHÉITÉ ADHÉSIF POUR DES PNEUS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.03.2021 IT 202100004847**

(43) Date of publication of application:
**10.01.2024 Bulletin 2024/02**

(73) Proprietor: **Zucchini Innovazione S.r.l.
44124 Ferrara (FE) (IT)**

(72) Inventor: **MASCELLANI, Gianfranco
44124 Ferrara (FE) (IT)**

(74) Representative: **Santi, Filippo et al
Barzanò & Zanardo S.p.A.
Via Piemonte 26
00187 Roma (IT)**

(56) References cited:
**CN-A- 112 280 233     US-A1- 2016 001 611**

(52) Cooperative Patent Classification (CPC): (Cont.)

C-Sets
**C09J 153/02, C08L 9/00**

**Description**

The present invention relates to an adhesive sealant formulation for tires.

In particular, the invention refers to an adhesive sealant formulation, for sealing the punctures in tires without an inner tube, hereinafter also referred to as tubeless tires.

It is known that tubeless tires are generally considered to be relatively safe against punctures, because even when an object, such as a nail, penetrates through a tubeless tire generating a hole, the material from which the tire is made tends to tighten around the nail, with the consequence that the nail remains tight in the hole and cannot come out easily and that the hole is completely taken up by the nail, so the air does not escape quickly. However, when a tubeless tire where a nail has entered is used for a long period of time, especially at high speed, the nail tends to come out due to centrifugal force and once the nail has come out, the air escapes quickly through the free hole.

Therefore, in order to keep a car in conditions of safety, it is important that, even when a nail that has penetrated through a tire comes out freeing the hole, the tire must be kept in a condition in which that hole does not allow the passage of the air contained in the tire.

To solve this problem, according to the prior art, tires for vehicles provided with a layer of sealing material, arranged inside the tire at the time of manufacturing, on the internal surface in projection of the tread, have been proposed. The application can take place in particular in the steps preceding the vulcanization, to ensure a better coupling between the tire and the layer of sealing material. The sealing material has a viscosity and adhesiveness such that, in the event of a puncture in the tread, with the expulsion of the object that caused the puncture, the sealant flows into the channel left behind and seals it hermetically.

In particular, a self-sealing tire is described in US 2016/001611 and a material for increasing the safety of a tire is described in CN 112 280 233.

According to the Applicant, one of the major problems encountered in the self-sealing tires is finding a correct combination of properties for the sealing material used. In fact, said material must be able to flow rapidly towards the puncture, adhere to the object that caused the puncture and not come out of the puncture, in order to avoid the loss of air and the consequent deflation of the tire. In addition, the sealing material must maintain its position inside the tire when the vehicle is stationary or during storage. On the other hand, when the tire is moved, which could create non-uniformities in the distribution of the sealing material, said sealing material must be able to be rearranged quickly and uniformly inside the tire. In fact, a displacement of the sealing material from its original position and its accumulation in other areas of the tire would not only cause a loss of balance in the weight distribution inside the tire, but would also make its use ineffective as a sealing layer, or would give the tire at least one unsatisfactory self-sealing capacity.

Another important limitation of the sealing materials according to the prior art is that they include volatile components, which during the application in the tire can evaporate, compromising the healthiness of the manufacturing environments.

Finally, it is desirable that the sealing material is applicable to the tire subsequently to the manufacturing of the tire itself, in particular to make a tire of traditional type self-sealing.

The solution according to the present invention fits into this context, aiming to provide an adhesive sealant formulation for tires whose composition is optimized to have a satisfactory behaviour in a wide range of temperature, as well as to facilitate its application on finished tires, using systems already available on the market, such as in particular hot melt adhesive extruders (Hot Melt type), and guaranteeing the maximum safety and healthiness of the working environment.

These and other results are obtained according to the present invention by proposing an adhesive sealant formulation applicable to all tubeless tires.

The aim of the present invention is therefore to provide an adhesive sealant formulation for tires which allows to overcome the limitations of the formulations according to the prior art and to obtain the technical results previously described.

A further aim of the invention is that said adhesive sealant formulation for tires can be realized and applied with substantially contained costs, both in terms of manufacturing costs and application costs.

Last but not the least, a further aim of the invention is to propose an adhesive sealant formulation for tires that is safe and reliable.

A first specific object of the present invention is therefore an adhesive sealant formulation for tires consisting of:

- from a minimum of 20% to a maximum of 35% by weight of the total formulation of block copolymers chosen from: polyisobutadiene (PIB), styrene-isoprene-styrene (SIS), styrene-butadiene-styrene (SBS), styrene-isoprene-butadiene-styrene (SIBS), styrene-ethylene-butadiene-styrene (SEBS), styrene-ethylene-propylene-styrene (SEPS), thermoplastic elastomers (TPE);
- from a minimum of 55% to a maximum of 75% by weight of the total formulation of resins chosen from: rosin resins, esterified rosin resins and other rosin derivatives, hydrocarbon resins, hydrogenated cycloaliphatic hydrocarbon resins, phenolic resins, styrene resins, or mixtures thereof;

- from a minimum of 0.2% up to a maximum of 2.0% by weight of the total formulation of a mixture of stabilizers and antioxidants, wherein the quantity of stabilizers within the mixture varies from 0 up to a maximum of 1.50% by weight of the total formulation and the amount of antioxidants varies from 0 up to a maximum of 1.50% by weight of the total formulation, such as in particular: primary phenolics pentaerythritol-tetrakis(3(3,5-di-tert-butyl-4-hydroxyphenyl) propionate);
- from a minimum of 5% to a maximum of 35% by weight of the total formulation of paraffinic or naphthenic plasticizers;
- from a minimum of 2% up to a maximum of 5% by weight of the total formulation of mineral fillers such as in particular: silica, carbon black, graphite.

Preferably, according to the present invention, the melting temperature of the entire mass of the complete formulation is comprised between a minimum of 160°C and a maximum of 180 °C.

A second specific object of the present invention is also a method for producing an adhesive sealant formulation for tires as previously defined, characterized in that the following components are hot mixed, at a temperature between 160°C and 180°C and under vacuum:

- from a minimum of 20% to a maximum of 35% by weight of the total formulation of block copolymers chosen from: polyisobutadiene (PIB), styrene-isoprene-styrene (SIS), styrene-butadiene-styrene (SBS), styrene-isoprene-butadiene-styrene (SIBS), styrene-ethylene-butadiene-styrene (SEBS), styrene-ethylene-propylene-styrene (SEPS), thermoplastic elastomers (TPE);
- from a minimum of 55% to a maximum of 75% by weight of the total formulation of resins chosen from: rosin resins, esterified rosin resins and other rosin derivatives, hydrocarbon resins, hydrogenated cycloaliphatic hydrocarbon resins, phenolic resins, styrene resins, or mixtures thereof;
- from a minimum of 0.2% up to a maximum of 2.0% by weight of the total formulation of a mixture of stabilizers and antioxidants, wherein the quantity of stabilizers within the mixture varies from 0 up to a maximum 1.50% by weight of the total formulation and the amount of antioxidants varies from 0 up to a maximum of 1.50% by weight of the total formulation, such as in particular: primary phenolics pentaerythritol-tetrakis(3(3,5-di-tert-butyl-4-hydroxyphenyl) propionate);
- from a minimum of 5% to a maximum of 35% by weight of the total formulation of paraffinic or naphthenic plasticizers;
- from a minimum of 2% up to a maximum of 5% by weight of the total formulation of mineral fillers such as in particular: silica, carbon black, graphite.

A third specific object of the present invention is a tire in which the inner surface, at least in correspondence with the tread, is coated with a layer of an adhesive sealant formulation as defined above.

Preferably, according to the invention, said layer of adhesive sealant formulation is coated with a layer of sound-absorbing material and more preferably said layer of sound-absorbing material comprises expanded EVA or expanded polyethylene.

A fourth specific object of the present invention is also a method for producing a tire as defined in claims 4-6, which comprises a step of applying by hot melt extrusion, on the inner surface of said tire, at least in correspondence with the tread, a layer of an adhesive sealant formulation for tires as previously defined, preferably at a temperature of 180 °C.

Furthermore, again according to the invention, said method provides a preliminary step wherein the internal surface of said tire is prepared by mechanical cleaning.

Finally, again according to the present invention, following said step of applying a layer of adhesive sealant formulation on the inner surface of said tire, it is provided a step wherein a layer of sound-absorbing material, which includes expanded EVA or expanded polyethylene, is further applied on said layer of adhesive sealant formulation for tires.

In particular, according to the invention, said layer of sound-absorbing material is applied directly on the adhesive sealant formulation layer, without the need of interposing intermediate adhesive layers or other preventive preparations.

The invention will be described below for illustrative but not limitative purposes, with particular reference to some illustrative examples.

The adhesive sealant formulation for tires according to the present invention is obtained by mixing together, in variable proportions according to the final desired characteristics, selected types of block copolymers with selected types of resins, antioxidants, and with paraffinic or naphthenic plasticizers.

By way of example, the characteristics of the adhesive sealant formulation for tires according to the present invention must be such to allow its practical use within a temperature range from -10°C to +130°C while maintaining its physical and mechanical characteristics unchanged when in use.

In particular, the composition of the adhesive sealant formulation for tires according to the present invention provides for the use of the following families of materials:

- block copolymers, from a minimum of 20% to a maximum of 35% by weight of the total formulation, chosen from: polyisobutadiene (PIB), styrene-isoprene-styrene (SIS), styrene-butadiene-styrene (SBS), styrene-isoprene-butadiene-styrene (SIBS), styrene-ethylene-butadiene-styrene (SEBS), styrene-ethylene-propylene-styrene (SEPS), thermoplastic elastomers (TPE);
- resins, from a minimum of 55% to a maximum of 75% by weight of the total formulation, chosen from: rosin resins, esterified rosin resins and other rosin derivatives, hydrocarbon resins, hydrogenated cycloaliphatic hydrocarbon resins, phenolic resins, styrene resins, or mixtures thereof;
- a mixture of stabilizers and antioxidants from a minimum of 0.2% up to a maximum of 2.0% by weight of the total formulation, wherein the quantity of stabilizers within the mixture varies from 0 up to a maximum of 1.50% by weight of the total formulation and the amount of antioxidants varies from 0 up to a maximum of 1.50% by weight of the total formulation such as in particular: primary phenolics pentaerythritol-tetrakis(3(3,5-di-tert-butil-4-hydroxyphenyl)propionate);
- paraffinic or naphthenic plasticizers from a minimum of 5% to a maximum of 35% by weight of the total formulation;
- mineral fillers from a minimum of 2% up to a maximum of 5% by weight of the total formulation, such as in particular: silica, carbon black, graphite.

In order to satisfy the peculiar characteristics required of the adhesive sealant formulation for tires according to the present invention for its final use, the composition must respect the specified ranges. In particular, the quantity of additives (i.e. antioxidants and/or stabilizers at high temperatures) is determined according to the quantity and nature of the block copolymers used.

The choice of copolymers and resins to be used is made according to the operating temperature range to be used, choosing those with higher molecular weight and higher viscosity to increase the temperature resistance and those with low viscosity and more flexible for low temperatures, in a temperature range from -20°C to +150°C.

Furthermore, in selecting the components for the production step, in order to avoid degradation issues, the following parameter must be respected for all components: melting temperature from a minimum of 160°C to a maximum of 180°C. Higher temperatures affect the final characteristics of the sealant product, such as the elastic modulus, the tensile strength and the adhesiveness or stickiness.

The preparation of the adhesive sealant formulation for tires according to the present invention must be done with a hot mixer and necessarily brought under vacuum to avoid the formation of air bubbles inside the mass, whose presence could cause a loss of pressure in the tire.

The processing procedure with the mixer must be established according to the raw materials used following the order indicated in the formulations attached below.

Examples

In the following examples two particular formulations, which have been subjected to tests aimed at verifying the feasibility and effectiveness of the adhesive sealant formulation for tires according to the present invention, are specified.

Table 1

| Component | % by weight | Composition |
|---|---|---|
| Europrene sol 9133 | 16.67 | styrene-isoprene-styrene |
| Napis30 | 11.91 | polyisobutadiene |
| Pharma 55 | 7.94 | paraffinic oil |
| Escorez 5380 | 11.51 | hydrocarbon resin |
| Regalite 1125 | 23.82 | hydrocarbon resin (with low melting point) |
| Pin Rosin 2683 | 11.91 | esterified rosin resin |
| Foralyn | 15.88 | hydrogenated rosin resin |
| Irganox 1010 | 0.36 | stabilizer |
| **Total** | 100.00 | |

Table 2

| Component | % by weight | Composition |
|-----------|-------------|-------------|
| Kraton 1163 | 13.26 | styrene-isoprene-styrene |
| Kraton 1114 | 13.26 | styrene-isoprene-styrene |
| Pharma 55 | 14.40 | paraffinic oil |
| Escorez 5380 | 10.44 | hydrocarbon resin |
| Regalite 1100 | 22.82 | hydrocarbon resin |
| Pin Rosin 2683 | 10.80 | esterified rosin resin |
| Pince Rosin 257.3 | 14.40 | esterified rosin resin |
| Irganox 1010 | 0.32 | stabilizer |
| Lowinox 22cp46 | 0.30 | antioxidant |
| **Total** | 100.00 | |

The adhesive sealant formulation for tires according to the present invention is presented as a rubbery mass, applicable in its molten state using a hot melt extruder system with its end part adapted to the tire profile, at a thickness of about 3 mm, by adjusting the temperature as follows: 160°C in the melting zone (or melting tank), 180°C at the application end (a shaped applicator).

These formulations are completely free from solvents or other volatile substances.

After the application, it is advisable to cover the applied mass with a very thin film of polyethylene or EVA, to prevent the mass, being sticky, from becoming covered with dust during the storage step of the tire.

According to an embodiment of the present invention, the adhesive sealant formulation for tires can also be prepared in the form of a preformed tape or sheet, to be subsequently applied to the tire, in this case prepared using a simple mechanical cleaning.

The relevant chemical and physical characteristics of the adhesive sealant formulation for tires according to the present invention are:

$$\text{adhesion by cohesion} = 2 \text{ N/mm} - 3 \text{ N/mm}$$

$$\text{elongation} = 1200\% \pm 15\%$$

$$\text{elastic modulus at 100\% elongation} = 1.5 - 3 \text{ kg/cm}^2$$

$$\text{tensile strength} = 10 \text{ kg/cm}^2 - 12 \text{ kg/cm}^2$$

$$\text{stickiness} = 1 \text{ cm as per ASTM D3121 standard}$$

$$\text{viscosity at } 160°C = 5500 - 5700 \text{ cP}$$

$$\text{viscosity at } 190°C = 1150 - 1350 \text{ cP}$$

Viscosity was measured with a Brookfield Thermocell viscometer, rotor 28, speed 10.

On tires fitted on a car, inside which the adhesive sealant formulation according to the present invention had been applied, it has been shown that, in the test with speed up to 150km/h, therefore with significant centrifugal forces, there is no deformation of the applied mass of the adhesive sealant formulation for tires according to the present invention, which has kept intact its elastoplastic consistency and therefore its functionality.

Further tests carried out on tires inside which the adhesive sealant formulation according to the present invention has been applied made it possible to verify that, by inserting a nail into a tire, it remains perfectly wrapped and glued to the adhesive sealant formulation mass, preventing the air from escaping. Subsequently, by completely extracting the nail, the adhesive sealant formulation mass glued thereto follows it, elongating until the hole is perfectly sealed and thus preventing the tire pressure loss.

It is also possible to manually apply on the mass (as per the formulation), previously applied inside a tire, a layer of sound-absorbing material, such as expanded EVA or expanded polyethylene to reduce the noise of the tire during rolling, without compromising the self-sealing characteristic. In particular, this layer of sound-absorbing material can be applied directly on the layer of adhesive sealant formulation, without the need of interposing adhesive intermediate layers or other preventive preparations.

The present invention has been described for illustrative, but not limitative, purposes, according to its preferred embodiments, but it is to be understood that variations and/or modifications may be made by those skilled in the art without thereby departing from the scope of protection, as defined by the attached claims.

## Claims

1. Adhesive sealant formulation for tires consisting of:

   - from a minimum of 20% to a maximum of 35% by weight of the total formulation of block copolymers chosen from: polyisobutadiene (PIB), styrene-isoprene-styrene (SIS), styrene-butadiene-styrene (SBS), styrene-isoprene-butadiene-styrene (SIBS), styrene-ethylene-butadiene-styrene (SEBS), styrene-ethylene-propylene-styrene (SEPS), thermoplastic elastomers (TPE);
   - from a minimum of 55% to a maximum of 75% by weight of the total formulation of resins chosen from: rosin resins, esterified rosin resins and other rosin derivatives, hydrocarbon resins, hydrogenated cycloaliphatic hydrocarbon resins, phenolic resins, styrene resins, or mixtures thereof;
   - from a minimum of 0.2% up to a maximum of 2.0% by weight of the total formulation of a mixture of stabilizers and antioxidants, wherein the quantity of stabilizers within the mixture varies from 0 up to a maximum of 1.50% by weight of the total formulation and the amount of antioxidants varies from 0 up to a maximum of 1.50% by weight of the total formulation, such as in particular: primary phenolic pentaerythritol-tetrakis(3(3,5-di-tert-butyl-4-hydroxyphenyl)propionate);
   - from a minimum of 5% up to a maximum of 35% by weight of the total formulation of paraffinic or naphthenic plasticizers;
   - from a minimum of 2% up to a maximum of 5% by weight of the total formulation of mineral fillers such as in particular: silica, carbon black, graphite.

2. Adhesive sealant formulation for tires according to claim 1, **characterised in that** the melting temperature of the entire mass of the complete formulation is comprised between a minimum of 160°C and a maximum of 180°C.

3. Method for producing an adhesive sealant formulation for tires as defined in claims 1-2, **characterised in that** the following components are hot mixed, at a temperature comprised between 160°C and 180°C and under vacuum:

   - from a minimum of 20% to a maximum of 35% by weight of the total formulation of block copolymers chosen from: polyisobutadiene (PIB), styrene-isoprene-styrene (SIS), styrene-butadiene-styrene (SBS), styrene-isoprene-butadiene-styrene (SIBS), styrene-ethylene-butadiene-styrene (SEBS), styrene-ethylene-propylene-styrene (SEPS), thermoplastic elastomers (TPE);
   - from a minimum of 55% to a maximum of 75% by weight of the total formulation of resins chosen from: rosin resins, esterified rosin resins and other rosin derivatives, hydrocarbon resins, hydrogenated cycloaliphatic hydrocarbon resins, phenolic resins, styrene resins, or mixtures thereof;
   - from a minimum of 0.2% up to a maximum of 2.0% by weight of the total formulation of a mixture of stabilizers and antioxidants, wherein the quantity of stabilizers within the mixture varies from 0 up to a maximum of 1.50% by weight of the total formulation and the amount of antioxidants varies from 0 up to a maximum of 1.50% by weight of the total formulation, such as in particular: primary phenolic pentaerythritol-tetrakis(3(3,5-di-tert-butyl-4-hydroxyphenyl)propionate);
   - from a minimum of 5% up to a maximum of 35% by weight of the total formulation of paraffinic or naphthenic plasticizers;
   - from a minimum of 2% up to a maximum of 5% by weight of the total formulation of mineral fillers such as in particular: silica, carbon black, graphite.

4. Tire, wherein the inner surface, at least in correspondence with the tread, is coated with a layer of an adhesive sealant formulation as defined in claims 1-2.

5. Tire according to claim 4, wherein said adhesive sealant formulation layer is coated with a layer of sound-absorbing material.

6. Tire according to claim 5, wherein said layer of sound-absorbing material comprises expanded EVA or expanded polyethylene.

7. Method for producing a tire as defined in claims 4-6, comprising a step of applying by hot melt extrusion, on the inner surface of said tire, at least in correspondence with the tread, a layer of an adhesive sealant formulation for tires as defined in claims 1-2.

8. Method according to claim 7, wherein said step of applying by hot melt extrusion takes place at a temperature of 180°C.

9. Method according to claim 7 or 8, wherein before said step of applying by hot melt extrusion, it is provided a step of preparing the inner surface of said tire by mechanical cleaning.

10. Method according to any one of claims 7-9, wherein after said step of applying on the inner surface of said tire a layer of an adhesive sealant formulation for tires, it is provided a step of applying on said layer of adhesive sealant formulation for tires a layer of sound-absorbing material, which includes expanded EVA or expanded polyethylene.

**Patentansprüche**

1. Klebe-Dichtstoff-Formulierung für Reifen, bestehend aus:

   - mindestens 20 bis höchstens 35 Gew.-% der gesamten Formulierung an Blockcopolymeren, ausgewählt aus: Polyisobutadien (PIB), Styrol-Isopren-Styrol (SIS), Styrol-Butadien-Styrol (SBS), Styrol-Isopren-Butadien-Styrol (SIBS), Styrol-Ethylen-Butadien-Styrol (SEBS), Styrol-Ethylen-Propylen-Styrol (SEPS), thermoplastische Elastomere (TPE);
   - mindestens 55 bis höchstens 75 Gew.-% der gesamten Formulierung an Harzen, ausgewählt aus: Kolophoniumharzen, veresterten Kolophoniumharzen und anderen Kolophoniumderivaten, Kohlenwasserstoffharzen, hydrierten cycloaliphatischen Kohlenwasserstoffharzen, Phenolharzen, Styrolharzen oder Mischungen davon;
   - mindestens 0,2 Gew.-% bis maximal 2,0 Gew.-% der Gesamtformulierung einer Mischung von Stabilisatoren und Antioxidantien, wobei die Menge an Stabilisatoren innerhalb der Mischung von 0 bis maximal 1.50 Gew.-% der Gesamtrezeptur und die Menge an Antioxidantien von 0 bis maximal 1,50 Gew.-% der Gesamtrezeptur variiert, wie insbesondere: primäres phenolisches Pentaerythritol-Tetrakis(3(3,5-di-tert-butyl-4-hydroxyphenyl) propionat);
   - mindestens 5 bis höchstens 35 Gew.-% der gesamten Formulierung an paraffinischen oder naphthenischen Weichmachern;
   - mindestens 2 bis höchstens 5 Gew.-% der Gesamtformulierung an mineralischen Füllstoffen, wie insbesondere Kieselsäure, Ruß, Graphit.

2. Klebe-Dichtstoff-Formulierung für Reifen nach Anspruch 1, **dadurch gekennzeichnet, dass** die Schmelztemperatur der gesamten Masse der vollständigen Formulierung zwischen einem Minimum von 160°C und einem Maximum von 180°C liegt.

3. Verfahren zur Herstellung einer klebenden Dichtungsformulierung für Reifen, wie in den Ansprüchen 1 bis 2 definiert, **dadurch gekennzeichnet, dass** die folgenden Komponenten bei einer Temperatur zwischen 160°C und 180°C und unter Vakuum heiß gemischt werden:

   - mindestens 20 bis höchstens 35 Gew.-% der gesamten Formulierung an Blockcopolymeren, ausgewählt aus: polyisobutadien (PIB), Styrol-Isopren-Styrol (SIS), Styrol-Butadien-Styrol (SBS), Styrol-Isopren-Butadien-Styrol (SIBS), Styrol-Ethylen-Butadien-Styrol (SEBS), Styrol-Ethylen-Propylen-Styrol (SEPS), thermoplastische Elastomere (TPE);
   - mindestens 55 bis höchstens 75 Gew.-% der gesamten Formulierung an Harzen, ausgewählt aus: Kolophoniumharzen, veresterten Kolophoniumharzen und anderen Kolophoniumderivaten, Kohlenwasserstoffharzen, hydrierten cycloaliphatischen Kohlenwasserstoffharzen, Phenolharzen, Styrolharzen oder Mischungen davon;
- mindestens 0,2 Gew.-% bis maximal 2,0 Gew.-% der Gesamtformulierung einer Mischung von Stabilisatoren und Antioxidantien, wobei die Menge an Stabilisatoren innerhalb der Mischung von 0 bis maximal 1.50 Gew.-% der Gesamtrezeptur und die Menge an Antioxidantien von 0 bis maximal 1,50 Gew.-% der Gesamtrezeptur variiert, wie insbesondere: primäres phenolisches Pentaerythritol-Tetrakis(3(3,5-di-tert-butyl-4-hydroxyphenyl) propionat);
- mindestens 5 bis höchstens 35 Gew.-% der gesamten Formulierung an paraffinischen oder naphthenischen Weichmachern;
- mindestens 2 bis höchstens 5 Gew.-% der Gesamtrezeptur an mineralischen Füllstoffen, wie insbesondere Kieselsäure, Ruß, Graphit.

4. Reifen, bei dem die Innenfläche zumindest in Übereinstimmung mit der Lauffläche mit einer Schicht einer klebenden Dichtungsformulierung gemäß den Ansprüchen 1-2 beschichtet ist.

5. Reifen nach Anspruch 4, wobei die klebende Dichtmittelformulierungsschicht mit einer Schicht aus schallabsorbierendem Material beschichtet ist.

6. Reifen nach Anspruch 5, wobei die Schicht aus schallabsorbierendem Material expandiertes EVA oder expandiertes Polyethylen umfasst.

7. Verfahren zur Herstellung eines Reifens gemäß den Ansprüchen 4 bis 6, umfassend einen Schritt des Aufbringens einer Schicht einer klebenden Dichtmittelformulierung für Reifen gemäß den Ansprüchen 1 bis 2 durch Heißschmelzextrusion auf die Innenfläche des Reifens, zumindest in Übereinstimmung mit der Lauffläche.

8. Verfahren nach Anspruch 7, wobei der Schritt des Auftragens durch Heißschmelzextrusion bei einer Temperatur von 180°C erfolgt.

9. Verfahren nach Anspruch 7 oder 8, wobei vor dem Schritt des Auftragens durch Heißschmelzextrusion ein Schritt der Vorbereitung der inneren Oberfläche des Reifens durch mechanische Reinigung vorgesehen ist.

10. Verfahren nach einem der Ansprüche 7 bis 9, wobei nach dem Schritt des Auftragens einer Schicht aus einer Klebstoff-Dichtstoff-Formulierung für Reifen auf die Innenfläche des Reifens ein Schritt des Auftragens einer Schicht aus schallabsorbierendem Material, das expandiertes EVA oder expandiertes Polyethylen enthält, auf die Schicht aus der Klebstoff-Dichtstoff-Formulierung für Reifen vorgesehen ist.

**Revendications**

1. Formulation d'un scellant adhésif pour pneumatiques composé de:

- d'un minimum de 20% à un maximum de 35% en poids de la formulation totale de copolymères à blocs choisis parmi: polyisobutadiène (PIB), styrène-isoprène-styrène (SIS), styrène-butadiène-styrène (SBS), styrène-isoprène-butadiène-styrène (SIBS), styrène-éthylène-butadiène-styrène (SEBS), styrène-éthylène-propylène-styrène (SEPS), élastomères thermoplastiques (TPE);
- d'un minimum de 55% à un maximum de 75% en poids de la formulation totale de résines choisies parmi: les résines de colophane, les résines de colophane estérifiées et autres dérivés de colophane, les résines d'hydrocarbures, les résines d'hydrocarbures cycloaliphatiques hydrogénées, les résines phénoliques, les résines de styrène, ou leurs mélanges ;
- d'un minimum de 0,2% à un maximum de 2,0% en poids de la formulation totale d'un mélange de stabilisants et d'antioxydants, dans lequel la quantité de stabilisants dans le mélange varie de 0 à un maximum de 1.50% en poids de la formulation totale et la quantité d'antioxydants varie de 0 à un maximum de 1,50% en poids de la formulation totale, comme en particulier: pentaérythritol-tétrakis (3(3,5-di-tert-butyl-4-hydroxyphényl)propionate) phénolique primaire;
- d'un minimum de 5% à un maximum de 35% en poids de la formulation totale de plastifiants paraffiniques ou naphténiques;
- d'un minimum de 2% à un maximum de 5% en poids de la formulation totale de charges minérales telles que, en particulier, la silice, le noir de carbone, le graphite.

**2.** Formulation de scellant adhésif pour pneumatiques selon la revendication 1, **caractérisée par le fait que** la température de fusion de la masse totale de la formulation complète est comprise entre un minimum de 160°C et un maximum de 180°C.

**3.** Procédé de fabrication d'une formulation de mastic adhésif pour pneumatiques tel que défini dans les revendications 1 et 2, **caractérisé par** le mélange à chaud des composants suivants, à une température comprise entre 160°C et 180°C et sous vide:

- d'un minimum de 20% à un maximum de 35% en poids de la formulation totale de copolymères à blocs choisis parmi: polyisobutadiène (PIB), styrène-isoprène-styrène (SIS), styrène-butadiène-styrène (SBS), styrène-isoprène-butadiène-styrène (SIBS), styrène-éthylène-butadiène-styrène (SEBS), styrène-éthylène-propylène-styrène (SEPS), élastomères thermoplastiques (TPE);
- d'un minimum de 55% à un maximum de 75% en poids de la formulation totale de résines choisies parmi: les résines de colophane, les résines de colophane estérifiées et autres dérivés de colophane, les résines d'hydrocarbures, les résines d'hydrocarbures cycloaliphatiques hydrogénées, les résines phénoliques, les résines de styrène, ou leurs mélanges ;
- d'un minimum de 0,2% à un maximum de 2,0% en poids de la formulation totale d'un mélange de stabilisants et d'antioxydants, dans lequel la quantité de stabilisants dans le mélange varie de 0 à un maximum de 1,50% en poids de la formulation totale et la quantité d'antioxydants varie de 0 à un maximum de 1,50% en poids de la formulation totale, comme en particulier: pentaérythritol-tétrakis (3(3,5-di-tert-butyl-4-hydroxyphényl)propionate) phénolique primaire;
- d'un minimum de 5% à un maximum de 35% en poids de la formulation totale de plastifiants paraffiniques ou naphténiques;
- d'un minimum de 2% à un maximum de 5% en poids de la formulation totale de charges minérales telles que notamment: silice, noir de carbone, graphite.

**4.** Pneu, dans lequel la surface intérieure, au moins en correspondance avec la bande de roulement, est recouverte d'une couche d'une formulation de scellant adhésif telle que définie dans les revendications 1-2.

**5.** Pneumatique selon la revendication 4, dans lequel la couche de formulation de l'agent d'étanchéité adhésif est recouverte d'une couche de matériau absorbant le son.

**6.** Pneumatique selon la revendication 5, dans lequel ladite couche de matériau absorbant le son comprend de l'EVA expansé ou du polyéthylène expansé.

**7.** Procédé de fabrication d'un pneumatique tel que défini dans les revendications 4 à 6, comprenant une étape d'application par extrusion à chaud, sur la surface intérieure dudit pneumatique, au moins en correspondance avec la bande de roulement, d'une couche d'une formulation de mastic adhésif pour pneumatiques tel que défini dans les revendications 1-2.

**8.** Procédé selon la revendication 7, dans lequel l'étape d'application par extrusion à chaud a lieu à une température de 180°C.

**9.** Procédé selon la revendication 7 ou 8, dans lequel, avant l'étape d'application par extrusion à chaud, il est prévu une étape de préparation de la surface intérieure du pneumatique par nettoyage mécanique.

**10.** Procédé selon l'une des revendications 7 à 9, dans lequel après l'étape d'application sur la surface intérieure du pneumatique d'une couche d'une formulation adhésive pour pneumatiques, il est prévu une étape d'application sur cette couche de formulation adhésive pour pneumatiques d'une couche de matériau insonorisant, qui comprend de l'EVA expansé ou du polyéthylène expansé.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016001611 A

- CN 112280233